# EUROPÄISCHE PATENTSCHRIFT

(11) **EP 0 879 730 B1**
(45) Veröffentlichungstag und Bekanntmachung des Hinweises auf die Patenterteilung: **24.09.2003**
(21) Anmeldenummer: 98108848.7
(22) Anmeldetag: 15.05.1998
(51) Int. Cl.: G09F 9/30, B60K 35/00

(54) **Anzeigeeinrichtung, insbesondere für Kraftfahrzeuge**
Visual display particularly for cars
Dispositf d'affichage en particulier pour voitures

(30) Priorität: 23.05.1997 DE 19721722
(43) Veröffentlichungstag der Anmeldung: 25.11.1998
(73) Patentinhaber: Robert Bosch GmbH, 70422 Stuttgart (DE)
(72) Erfinder: Breitling, Wolfram, 74343 Sachsenheim (DE); Merz, Erich, 74626 Bretzfeld (DE); Eisenhardt, Harald, 71277 Rutesheim (DE)
(74) Vertreter: Bee, Joachim

(56) Entgegenhaltungen:
- DE-C- 3 514 438
- US-A- 4 838 661
- US-A- 5 347 293

## Beschreibung

Die Erfindung betrifft eine Anzeigeeinrichtung, insbesondere für Kraftfahrzeuge, mit den im Oberbegriff des Anspruchs 1 genannten Merkmalen.

### Stand der Technik

Es ist bekannt, Informationen über den Betriebszustand eines Kraftfahrzeuges dem Fahrzeugführer über Anzeigeeinrichtungen mitzuteilen. Hierzu werden unter anderem Displays verwendet, die in einer Matrix angeordnete und einzeln ansteuerbare Lumineszenselemente aufweisen. Den Lumineszenselementen sind Leuchtquellen zugeordnet, deren Licht je nach Ansteuerung der Lumineszenselemente abgeschattet oder durchgelassen wird. Entsprechend der Ansteuerung ist somit die Darstellung einer Information möglich.

Bekanntermaßen werden diese Displays entweder in sogenannter Positivtechnik ausgeführt, das heißt, die die Information darstellenden Lumineszenselemente werden angesteuert, so daß diese für Licht abschalten und die entsprechende Information sichtbar ist. Eine derartige positive Darstellung bietet günstige Ablesmöglichkeiten bei Auflicht, beispielsweise durch direkte Sonneneinstrahlung. Die zur Ablesbarkeit bei Dunkelheit benötigte Beleuchtung führt auf Grund der großen, nicht angesteuerten Hintergrundfläche zu einer Blendwirkung. Andererseits sind Anzeigeeinrichtungen bekannt, die mit einer Negativtechnik arbeiten, das heißt, die die Informationen wiedergebenden Lumineszenzelemente werden nicht angesteuert, während alle anderen Lumineszenzelemente des Displays angesteuert sind. Hierdurch wird das Licht der Leuchtquellen im Bereich der Hintergrunddarstellung abgeschattet und in den Bereichen der Informationsdarstellung durchgelassen, so dass die Informationsdarstellung erleuchtet sichtbar ist. Hierdurch ist zwar eine gute Ablesbarkeit bei Dunkelheit gewährleistet, jedoch sind derartige Darstellungen bei Auflicht, beispielsweise bei direkter Sonneneinstrahlung, nur eingeschränkt lesbar.

Aus der US 5,347,293 ist eine den Merkmalen des Oberbegriffs des Anspruchs 1 entsprechende Anzeigevorrichtung für Kraftfahrzeuge bekannt, bei der in Abhängigkeit von einer über einen Sensor gemessenen Helligkeit eine Umschaltung einer Punktmatrixanzeige zwischen einer negativen und einer positiven Kontrastdarstellung erfolgt.

### Vorteile der Erfindung

Die erfindungsgemäße Anzeigeeinrichtung mit den im Anspruch 1 genannten Merkmale bietet dem gegenüber den Vorteil, dass unabhängig von äußeren Lichtverhältnissen jederzeit eine gute Ablesbarkeit der Anzeigeinrichtung gewährleistet ist. Dadurch, dass eine Ansteuerung für die Lumineszenzelemente zur Darstellung positiver Informationswiedergaben und negativer Informationswiedergaben umschaltbar ist, kann sehr vorteilhaft entsprechend der tatsächlichen äußeren Lichtverhältnisse eine Anpassung der Anzeigeeinrichtung erfolgen. Bei großer Helligkeit, beispielsweise durch direkte Sonneneinstrahlung, kann die Anzeigeeinrichtung auf positive Informationswiedergabe geschaltet sein, während bei Dunkelheit eine Umschaltung auf negative Informationswiedergabe erfolgt.

Erfindungsgemäß ist vorgesehen, daß einzelne Lumineszenselemente zu wählbaren Informationsdarstellungen zusammengeschaltet sind. Hierdurch verringert sich der Ansteueraufwand auf ein notwendiges Minimum, da nur die tatsächlich erforderlichen Informationsdarstellungen für eine positive und eine negative Informationswiedergabe umgeschaltet werden brauchen. Durch eine entsprechende LCD-Ausführung muß nicht jedes einzelne Lumineszenselement, sondern die gesamte Gruppe, von beispielsweise eine Ziffer oder ein Symbol darstellenden Lumineszenselementen, die zu der möglichen Informationsdarstellung gehören, umgeschaltet werden.

In weiterer bevorzugter Ausgestaltung der Erfindung ist vorgesehen, daß die nicht zu Informationsdarstellungen gehörenden Lumineszenselemente zu wenigstens einem Umschaltsegment zur Umschaltung zwischen positiver und negativer Informationswiedergaben zusammenschaltbar sind. Hierdurch wird ebenfalls der schaltungstechnische Aufwand zur Umschaltung zwischen positiver und negativer Informationswiedergabe auf ein notwendiges Minimum beschränkt. Es können die Lumineszenselemente zu Gruppen zusammengefaßt werden, die nicht zu einer Informationsdarstellung gehören, und diese gemeinsam zwischen positiver und negativer Informationswiedergabe umgeschaltet werden.

Durch die Zusammenfassung einzelner Lumineszenselemente zu Gruppen von Lumineszenselementen, die einerseits zu Informationsdarstellungen und andererseits nicht zu Informationsdarstellungen genutzt werden, läßt sich die Anzahl der einzeln anzusteuernden Lumineszenselemente gering halten.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine Anzeigeeinrichtung mit positiver Informationswiedergabe und
- Figur 2: eine Anzeigeeinrichtung mit negativer Informationswiedergabe.

### Beschreibung des Ausführungsbeispiels

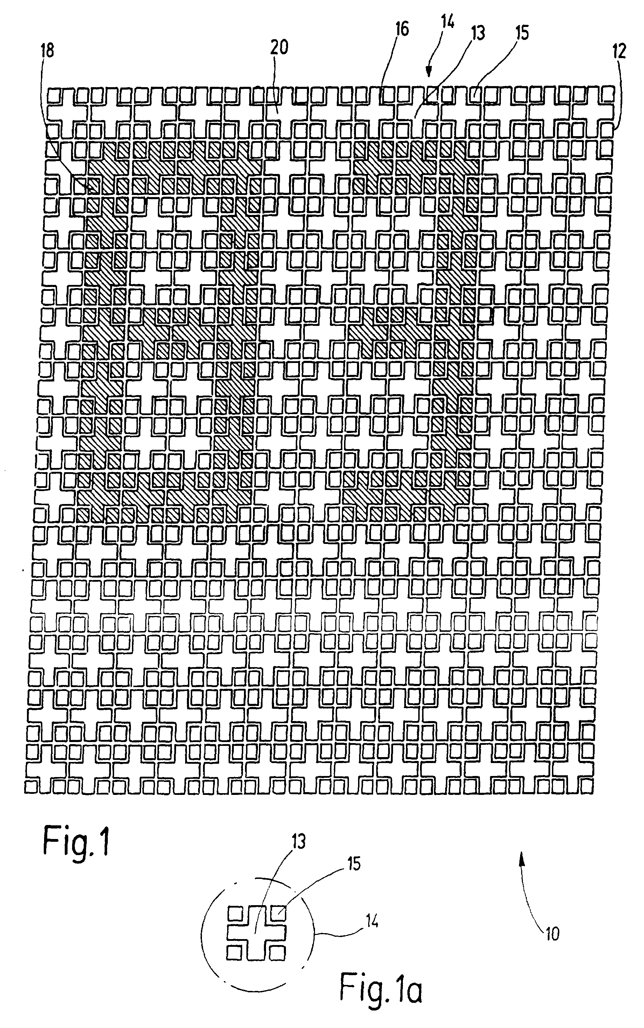

In Figur 1 ist eine Anzeigeeinrichtung 10 gezeigt, die in einem Sichtbereich 12 in einer Matrix angeordnete Lumineszenselemente-Gruppen 14 aufweist. Die Lumineszenselemente-Gruppen 14 werden im gezeigten Beispiel von spalten- und zeilenförmig angeordneten - in Draufsicht gesehen - kreuzförmigen Elementen 13 gebildet, deren Eckbereiche durch weitere Lumineszenselemente 15 aufgefüllt sind (Figur 1 a). Die Lumineszenselemente 13, 15 untereinander sind durch schmale Stege 16 getrennt, die sich entsprechend der Ausbildung der Lumineszenselemente verzweigen.

Der Aufbau und die Funktion der Lumineszenselemente-Gruppen 14 beziehungsweise der Lumineszenselemente 13, 15 ist allgemein bekannt, so daß im Rahmen der folgenden Beschreibung hierauf nicht näher eingegangen werden soll. Diese bestehen aus einem Flüssigkristall und einer hinter dem Flüssigkristall angeordneten Leuchtquelle. Hierbei kann eine gemeinsame Leuchtquelle für alle Lumineszenselemente-Gruppen 14 eingesetzt werden. Durch Beaufschlagung mit einem elektrischen Steuersignal, das über die Stege 16 an die jeweiligen Lumineszenselemente-Gruppen 14 beziehungsweise die Lumineszenselemente 13, 15 heranführbar ist, kann der Flüssigkristall zwischen optisch transparent und optisch nicht transparent umgeschaltet werden. Hierdurch ist das von der hinter dem Flüssigkristall angeordneten Leuchtquelle ausgehende Licht entweder sichtbar oder nicht sichtbar.

Die Anzeigeeinrichtung 10 kann beispielsweise in Kraftfahrzeugen der Anzeige einer Fahrzeuggeschwindigkeit dienen. In dem gezeigten Beispiel wird davon ausgegangen, daß beispielsweise eine Geschwindigkeit von 83 km/h angezeigt werden soll.

Um bestimmte Informationsanzeigen zu realisieren, sind die Lumineszenselemente-Gruppen 14 und/oder Lumineszenselemente 13, 15 in Gruppen zusammengefaßt, die einerseits dem Anzeigen von Informationsdarstellungen 18 und einem andererseits nicht der Informationsdarstellung dienenden Umschaltsegment 20 zugeordnet sind. Sollen auf eine Anzeigeeinrichtung 10 unterschiedliche Informationsdarstellungen 18, beispielsweise unterschiedliche Ziffern oder Symbole, erfolgen, erfolgt eine entsprechende Auswahl und Zuordnung der unterschiedlichen Gruppen von Lumineszenselemente-Gruppen 14 und/oder der Lumineszenselemente 13, 15 zu der Informationsdarstellung 18 beziehungsweise zu dem Umschaltsegment 20.

Zur positiven Informationswiedergabe werden die Lumineszenselemente-Gruppen 14 und/oder die Lumineszenselemente 13, 15 der Informationsdarstellung 18 angesteuert, so daß das Licht im Bereich der Informationsdarstellung 18 abgeschaltet ist (geschwärzt dargestellt). Die zum Umschaltsegment 20 gehörenden Lumineszenselemente-Gruppen 14 und/oder Lumineszenselemente 13, 15 werden nicht angesteuert, so daß diese optisch transparent sind, und somit in diesen Bereichen das Licht des Leuchtmittels sichtbar ist. Ein Betrachter der Anzeigeeinrichtung 10 sieht somit eine geschwärzte 83 als positive Informationswiedergabe.

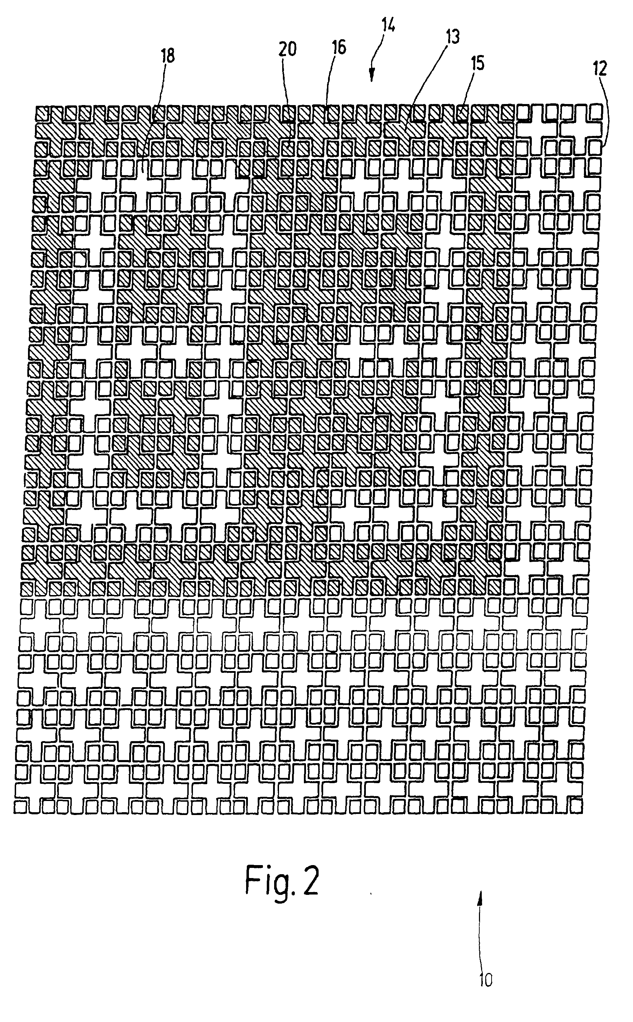

In der Figur 2 ist, ausgehend vom gleichen Beispiel, eine negative Informationswiedergabe dargestellt. Hier werden die Lumineszenselemente-Gruppen 14 und/oder Lumineszenselemente 13, 15, die zur Informationsdarstellung 18 gehören, nicht angesteuert, so daß diese für das von der Leuchtquelle abgestrahlte Licht optisch transparent sind. Die Lumineszenselemente-Gruppen 14 und/oder Lumineszenselemente 13, 15 des Umschaltsegmentes 20 hingegen werden angesteuert, so daß das Licht der Leuchtquelle im Bereich des Umschaltsegmentes 20 abgeschaltet ist (geschwärzt dargestellt - nur in unmittelbarer Umgebung der Informationsdarstellung 18, wobei klar ist, daß alle Lumineszenselemente des Umschaltsegmentes 20 angesteuert sind). Hierdurch wird, beispielsweise bei einer Geschwindigkeitsangabe, die Zahl 83 in Negativdarstellung (hell) sichtbar.

Durch die Umschaltung der Anzeigeeinrichtung 10 von einer positiven Informationswiedergabe gemäß Figur 1 in eine negative Informationswiedergabe gemäß Figur 2 und umgekehrt lassen sich die äußeren Lichtverhältnisse berücksichtigen. So kann beispielsweise eine Umschaltung zwischen Tag- und Nachtdesign erfolgen. Durch die gleichmäßige Struktur der Lumineszenselemente 14 ergibt sich eine homogene Struktur der Oberfläche der Anzeigeeinrichtung 10.

Die Erfindung beschränkt sich selbstverständlich nicht auf das dargestellte Ausführungsbeispiel. So sind Lumineszenselemente-Gruppen 14 oder Lumineszenselemente 13, 15 mit beliebiger Größe und Kontur, sowie deren beliebige Zusammenfassung zu Elementen-Gruppen möglich. So können beispielsweise zur Darstellung von Informationsdarstellungen 18 mit Kurven, schrägen Linien und Mischformen hiervon die Lumineszenselemente eine entsprechend angepaßte Kontur aufweisen.

Das Display kann beispielsweise transmissiv, transflektiv und/oder reflektiv sein. Ferner können andere Displaytechniken angewendet werden.

## Patentansprüche

1. Anzeigeeinrichtung (10) insbesondere für Kraftfahrzeuge, mit einzeln ansteuerbaren, in einer Quasi-Matrix zu einem Display angeordneten Lumineszenzelementen (13, 15), wobei die Lumineszenzelemente (13, 15) oder Lumineszenzelemente-Gruppen (14) zur Darstellung positiver Informationswiedergabe und negativer Informationswiedergabe umschaltbar sind, **dadurch gekennzeichnet, dass** einzelne Lumineszenzelemente-Gruppen (14) und/oder Lumineszenzelemente (13, 15) zu wählbaren Informationsdarstellungen (18) zusammengeschaltet sind, und dass eine gesamte, zur gewählten Informationsdarstellung (18) zusammengeschaltete Gruppe zwischen einer positiven und einer negativen Informationswiedergabe umgeschaltet wird.

2. Anzeigeeinrichtung nach Anspruch 1, **dadurch gekennzeichnet, dass** nicht zu den Informationsdarstellungen (18) gehörende Lumineszenzelemente-Gruppen (14) und/oder Lumineszenzelemente (13, 15) zu einem oder mehreren Umschalt-Segmenten zur Umschaltung zwischen positiver und negativer Informationswiedergabe zusammengeschaltet und ansteuerbar sind.

3. Anzeigeeinrichtung nach einem der vorhergehenden Ansprüche, **dadurch gekennzeichnet, dass** eine Kontur der Lumineszenzelemente-Gruppen (14) und/oder Lumineszenzelemente (13, 15) den darzustellenden Informationsdarstellungen (18) angepasst ist.

4. Anzeigeeinrichtung nach einem der vorhergehenden Ansprüche, **dadurch gekennzeichnet, dass** die Anzeigeeinrichtung (10) transmissiv, transreflektiv und/oder reflektiv ausgeführt ist.

## Claims

1. Display device (10), in particular for motor vehicles, having individually drivable luminescence elements (13, 15) arranged in a quasi-matrix to form a display, it being possible for the luminescence elements (13, 15) or luminescence element groups (14) to be switched over in order to display positive playback of information and negative playback of information, **characterized in that** individual luminescence element groups (14) and/or luminescence elements (13, 15) are interconnected for the purpose of selectable displays (18) of information, and **in that** an entire group, interconnected to form the selected information display (18) is switched over between a positive and a negative playback of information.

2. Display device according to Claim 1, **characterized in that** luminescence element groups (14) and/or luminescence elements (13, 15) not belonging to the information displays (18) are interconnected to form one or more switchable segments for switching over between positive and negative playback of information, and can be driven.

3. Display device according to one of the preceding claims, **characterized in that** a contour of the luminescence element groups (14) and/or luminescence elements (13, 15) is adapted to the information displays (18) to be displayed.

4. Display device according to one of the preceding claims, **characterized in that** the display device (10) is of transmissive, transreflective and/or reflective design.

## Revendications

1. Installation d'affichage (10) notamment pour véhicule automobile comportant des éléments luminescents (13, 15) répartis sous la forme d'une quasi-matrice d'un afficheur, et commandés séparément, ces éléments luminescents (13, 15) ou groupes d'éléments luminescents (14) pouvant être commutés pour une présentation positive d'informations et une présentation négative d'informations,
**caractérisée en ce que**
différents groupes d'éléments luminescents (14) et/ou les éléments luminescents (13, 15) peuvent être connectés ensemble pour des présentations sélectives d'informations (18), et un groupe d'ensemble connecté pour la représentation (18) choisie peut commuter entre une reproduction positive et une reproduction négative de l'information.

2. Installation d'affichage selon la revendication 1,
**caractérisée en ce que**
des groupes d'éléments luminescents (14) qui n'appartiennent pas à la présentation d'informations (18) et/ou des éléments luminescents (13, 15) peuvent étre connectés ensemble et être commandés en un ou plusieurs segments de commutation pour commuter entre une reproduction positive et une reproduction négative d'informations.

3. Installation d'affichage selon l'une des revendications précédentes,
**caractérisée en ce qu'**
un contour des groupes d'éléments luminescents (14) et/ou d'éléments luminescents (13, 15) est adapté pour des représentations d'informations (18).

4. Installation d'affichage selon l'une des revendications précédentes,
**caractérisée en ce que**
l'installation d'affichage (10) fonctionne par transmission, par transmission et réflexion et/ou par réflexion.
